# EUROPÄISCHE PATENTANMELDUNG

(11) **EP 0 635 628 A1**
(43) Veröffentlichungstag der Anmeldung: **25.01.1995**
(21) Anmeldenummer: 94110963.9
(22) Anmeldetag: 14.07.1994
(51) Int. Cl.: F01N 7/18, F16C 27/02

(54) **Elastisches Gleitlager**

(30) Priorität: 17.07.1993 DE 4324000
(71) Anmelder: WEGU Gummi- und Kunststoffwerke Walter Dräbing KG, D-34123 Kassel (DE); Norton Pampus GmbH, D-47877 Willich (DE)
(72) Erfinder: Brill, Hartmut, D-37242 BSA-Dudenrode (DE); Groll, Gero M., D-40667 Meerbusch (DE)
(74) Vertreter: Rehberg, Elmar, Dipl.-Ing.

(57) **Zusammenfassung**

Ein elastisches Gleitlager (1) weist eine zentrale Durchgangsöffnung (6) zur Aufnahme eines im Querschnitt runden Lagerbolzens (2) auf. Die Innenoberfläche der Durchgangsöffnung (6) wird von einer in einem Federkörper (5) aus elastischem Werkstoff eingebetteten Hülse (7) ausgebildet. Die zentrale Durchgangsöffnung (6) weist einen mehreckigen oder sternförmigen Querschnitt auf. Die Hülse (7) ist aus einem flexiblen Werkstoff ausgebildet.

## Beschreibung

Die Erfindung bezieht sich auf ein elastisches Gleitlager mit einer zentralen Durchgangsöffnung zur Aufnahme eines im Querschnitt runden Lagerbolzens, wobei die Innenoberfläche der Durchgangsöffnung in einem Federkörper aus einem elastischen Werkstoff eingebetteten Hülse ausgebildet ist.

Elastische Lager mit diesen Merkmalen sind als schwingungsdämmende und -dämpfende Lagerungselemente für die einzelnen Bestandteile der Antriebsaggregate von Kraftfahrzeugen bekannt. Der runde Lagerbolzen greift in eine runde Hülse aus einem Kunststoff ein, der vorzugsweise gute wärmeisolierende Eigenschaften aufweist. Der Innendurchmesser der Hülse bzw. der zentralen Durchgangsöffnung und der Außendurchmesser des runden Lagerbolzens sind dabei gleich. Die Hülse liegt somit ganzflächig an dem Lagerbolzen an. Bei Auftreten von Kräften zwischen dem Lagerbolzen und dem elastischen Lager werden diese von dem die Hülse umgebenden Federkörper aus dem elastischen Werkstoff aufgenommen. Eine Verformung der Hülse erfolgt dabei nicht. Sie ist vielmehr vorgesehen, um den aus einem Elastomer ausgebildeten Federkörper vor Einwirkungen von Wärme und Reibung über den Lagerbolzen zu schützen. Der aus Elastomer ausgebildete Federkörper kann unterschiedlich ausgeformt sein, wobei es erstrebenswert ist, das Elastomer möglichst auf Druck und weniger auf Zug zu belasten. Eine gewisse Belastung des Elastomers auf Zug ist jedoch bei dem bekannten Lager auf der der Kraft abgekehrten Seite der Hülse unvermeidbar. Weiterhin stellt sich als nachteilig heraus, daß der Innendurchmesser der Hülse und der Außendurchmesser des Lagerbolzens genau aufeinander abgestimmt sein müssen, um einerseits ein leichtes Einführen des Lagerbolzens in die zentrale Durchgangsöffnung zu ermöglichen und andererseits keine ungewünschte Geräuschentwicklung durch Spiel des Lagerbolzens in der zentralen Durchgangsöffnung hervorzurufen.

Die bekannten elastischen Lager sind auch geeignet, Schwingungen in Richtung der Haupterstreckungsrichtung des Lagerbolzens aufzunehmen. Hierbei macht sich jedoch ein Verschmutzen des Gleitlagers bzw. des Lagerbolzens rasch in einem Festsetzen der Hülse auf dem Lagerbolzen bemerkbar. In der Folge wird der Federkörper bei seitlicher Auslenkung der Hülse in unerwünschter Weise auf Zug beansprucht. Darüberhinaus verringern sich mit dem Blockieren der Hülse die von dem elastischen Gleitlager in der Haupterstreckungsrichtung des Lagerbolzens aufnehmbaren Wege beträchtlich.

Der Erfindung liegt daher die Aufgabe zugrunde, ein elastisches Gleitlager der eingangs beschriebenen Art aufzuzeigen, bei dem ein zuverlässiges Abgleiten der Hülse auf dem Lagerbolzen gewährleistet ist und bei dem eine Beanspruchung des Federkörpers aus elastischem Werkstoff auf Zug möglichst weitgehend verhindert wird.

Erfindungsgemäß wird dies dadurch erreicht, daß die zentrale Durchgangsöffnung einen mehreckigen oder sternförmigen Querschnitt aufweist und daß die Hülse aus einem flexiblen Werkstoff ausgebildet ist. In die mehreckige oder sternförmige Durchgangsöffnung sind Lagerbolzen mit verschiedenen Durchmessern einschiebbar. Dennoch wird eine genau definierte Relativlage erreicht, solange der Durchmesser des Lagerbolzens mindestens genauso groß wie der kleinste freie Querschnitt der zentralen Durchgangsöffnung ist. Ein beispielsweise aufgrund von Toleranzen über den kleinsten freien Querschnitt hinausgehender Durchmesser des Lagerbolzens führt zu einer teilweisen Verformung des die flexible Hülse umgebenden Federkörpers. Bei dieser Verformung wird der Federkörper ausschließlich auf Druck beansprucht. So ist mit dem Durchmesser des Lagerbolzens über die Verformung des Federkörpers eine Vorspannkraft des elastischen Gleitlagers auf den Lagerbolzen einstellbar. Hiermit ist sowohl eine Einflußnahme auf die Federeigenschaften des elastischen Gleitlagers in radialer Richtung zur Haupterstreckung des Lagerbolzens als auch auf die in axialer Richtung wirkenden Gleitreibungskräfte zwischen der Hülse und dem Lagerbolzen möglich. Eine ausreichend große Vorspannung stellt zudem sicher, daß der Lagerbolzen auf seiner einer einwirkenden Kraft zugewandten Rückseite nicht von der Hülse abhebt. Hiermit wird gleichzeitig dafür gesorgt, daß von dem Lagerbolzen keine nennenswerte Zugbeanspruchung des Federkörpers aus dem elastischen Werkstoff ausgeht. Dies ist darauf zurückzuführen, daß die Innenoberfläche der Hülse durch die mehreckige oder sternförmige Ausbildung der zentralen Durchgangsöffnung einen vergrößerten Umfang aufweist. Unter Ausnutzung dieses vergrößerten Umfangs erfolgende Relativbewegungen des Lagerbolzens und des elastischen Gleitlagers wirken sich ausschließlich in einer Druckbeanspruchung des Federkörpers aus dem elastischen Werkstoff aus. Hierbei sind unter "innerhalb des vergrößerten Umfangs" zumindest solche Bewegungen zu vestehen, die innerhalb eines Kreises mit dem vergrößerten Umfang erfolgen. Die über den runden Lagerbolzen hinausstehenden freien Ecken der mehreckigen oder sternförmigen Durchgangsöffnung sind darüberhinaus geeignet, Schmutz, der sich auf dem Lagerbolzen oder gar zwischen dem Lagerbolzen und der Hülse angesammelt hat, abzuführen. Diese Abführwirkung der freien Ecken der zentralen Durchgangsöffnung wird durch eine axiale Gleitbewegung des Lagerbolzens in der Hülse gefördert. Weiterhin stellt der große Umfang an der Innenseite der Hülse sicher, daß mit einem Eindringen von Schmutz zwischen die Hülse und den Lagerbolzen kein Festsetzen der Hülse auf dem Lagerbolzen verbunden ist. Das neue elastische Gleitlager stellt damit in vorteilhafter Weise seine dauerhafte Funktionsfähigkeit sicher. Dies gilt sowohl hinsichtlich einer möglichst geringen Beanspruchung des Federkörpers aus elastischem Werkstoff als auch hinsichtlich der axialen Gleitfähigkeit in der Haupterstreckungsrichtung des Lagerbolzens.

In einer einfachen und zugleich vorteilhaften Ausführungsform entspricht der Querschnitt der zentralen Durchgangsöffnung einem gleichschenkligen Dreieck. Auf diese Weise sind sowohl der Umfang der Innenoberfläche der Hülse im Vergleich zu der freien Querschnittsfläche der zentralen Durchgangsöffnung als auch die freien Querschnitte in den Ecken der zentralen Durchgangsöffnung bei eingeschobenen Lagerbolzen vergleichsweise groß. Hierdurch sind die mit dem neuen Gleitlager erreichbaren Vorteile voll nutzbar.

Hinsichtlich der Bemaßungen des Gleitlagers unter Bezugnahme auf den Lagerbolzen ist anzustreben, daß der kleinste freie Querschnitt der zentralen Durchgangsöffnung kleiner als der Durchmesser des Lagerbolzens und deren größter freier Querschnitt größer als der Durchmesser des Lagerbolzens vorgesehen sind. Das Übermaß des Lagerbolzens im Vergleich zum kleinsten freien Querschnitt der zentralen Durchgangsöffnung stellt die gewünschte Vorspannung und die damit einhergehende Definition der Relativpositionierung sicher. Das Übermaß des größten freien Querschnitts garantiert die Schmutzabfuhr aus dem Bereich des Gleitlagers und auch die Vermeidung der unerwünschten Zugbeanspruchung des Federkörpers.

Die Hülse ist vorzugsweise aus einem abriebfesten und temperaturstabilen Kunststoff ausgebildet. So ist sichergestellt, daß es weder zu einer Beschädigung der Hülse durch die Gleitbewegung längs des Lagerbolzens noch durch von dem Lagerbolzen übertragene Wärme kommt. Kunststoff als flexibler Werkstoff für die Hülse ist insbesondere hinsichtlich seiner termischen Isolationseigenschaften zwischen dem Lagerbolzen und dem Federkörper vorteilhaft. Darüberhinaus sind bekannte Kunststoff im Gegensatz zu Metall auch in größeren Dicken noch ausreichend flexibel.

Ein besonders geeigneter Kunststoff für die Hülse ist Polytetrafluorethen (PTFE). Dieser Werkstoff ist beispielsweise unter dem Namen Teflon handelsüblich. Er weist eine sehr gute Temperaturstabilität und gleichzeitig hervorragende Gleiteigenschaften auf.

Bei der Herstellung des elastischen Gleitlagers kann in einfacher Weise von einem Schlauchabschnitt als Ausgangsmaterial für die Hülse ausgegangen werden, so daß die Hülse bei dem elastischen Gleitlager ein verformter Schlauchabschnitt ist.

Wenn der Federkörper aus einem Elastomer ausgebildet ist, kann das Elastomer bei der Herstellung des elastischen Gleitlagers an die Hülse angespritzt werden. Bei dem Federkörper handelt es sich so um ein an die Hülse angespritzes Spritzgußteil. Die dauerhafte Verbindung der Hülse mit dem Federkörper kann dabei durch ein Haftmittel bewirkt sein, sofern ein direktes Anvulkanisieren des Federkörpers an die Hülse nicht möglich ist.

Die Erfindung wird im Folgenden anhand von Ausführungsbeispielen näher erläutert und beschrieben. Es zeigt:
- Figur 1: eine erste Ausführungsform des elastischen Gleitlagers im Querschnitt,
- Figur 2: das elastische Gleitlager gemäß Figur 1 in der Seitenansicht,
- Figur 3 und 4: zwei weitere Ausführungsformen des elastischen Gleitlagers im Querschnitt,
- Figur 5: ein Detail des elastischen Gleitlagers gemäß Figur 1 unter Berücksichtigung von Lagerbolzen mit verschiedenen Durchmessern,
- Figur 6: das Detail gemäß Figur 5 unter Berücksichtigung einer Verschmutzung des Gleitlagers und
- Figur 7: das Detail gemäß Figur 5 unter Berücksichtigung einer radialen Krafteinwirkung auf den Lagerbolzen.

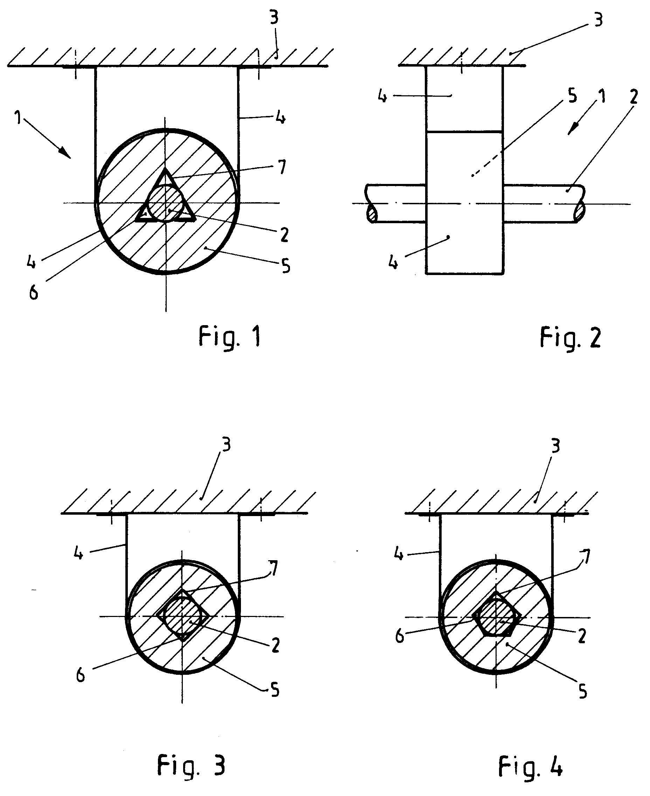

Das in den Figuren 1 und 2 wiedergegebene elastische Gleitlager 1 ist zur Lagerung eines mit einem Lagerbolzen 2 verbundenen, hier nicht näher dargestellten ersten Bauteils an einem zweiten Bauteil 3 vorgesehen. Hierbei kann es sich um die Abgasanlage eines Kraftfahrzeugs einerseits und dessen Karosserie andererseits handeln. Das elastische Gleitlager 1 weist einen mit dem zweiten Bauteil 3 fest verschraubten Rahmen 4 auf. Der Rahmen umschließt einen etwa ringförmigen Federkörper 5 mit einer zentralen Durchgangsöffnung 6. Der Querschnitt der Durchgangsöffnung 6 weist die Form eines gleichschenkligen Dreiecks auf. Die Innenoberfläche der Durchgangsöffnung 6 wird von einer Hülse 7 aus Teflon ausgebildet. Der Werkstoff der Hülse 7 ist flexibel, daß heißt verformbar, so daß bei radialen Auslenkungen von dem Lagerbolzen 2 ausschließlich Druckkräfte auf den Federkörper 5 übertragen werden. Neben radialen Bewegungen des Lagerbolzens 2 nimmt das Gleitlager 1 auch axiale Bewegungen auf. Dabei gleitet die Hülse 7 auf dem Lagerbolzen 2 ab.

Bei der Ausgestaltung der zentralen Durchgangsöffnung 6 kommt es nicht auf die Form des gleichschenkligen Dreiecks gemäß Figur 1 an. Vielmehr kann die Durchgangsöffnung 6 auch vier- oder mehreckig ausgebildet sein, wie dies in den Figuren 3 und 4 dargestellt ist. Daneben ist auch eine sternförmige Ausbildung des Querschnitts der zentralen Durchgangsöffnung 6 möglich. Wesentlich ist nur, daß der die Durchgangsöffnung 6 begrenzende innere Umfang der Hülse größer ist als der äußere Umfang des Lagerbolzens 2. Er muß dabei um soviel größer sein, daß eine Bewegung des Lagerbolzens 2 relativ zu dem Gleitlager 1 innerhalb dieses Umfangs möglich ist, gleichzeitig sollten auch bei einem in die zentrale Durchgangsöffnung 6 eingeschobenem Lagerbolzen 2 Bereiche in den Ecken der zentralen Durchgangsöffnung 6 mit freiem Querschnitt verbleiben.

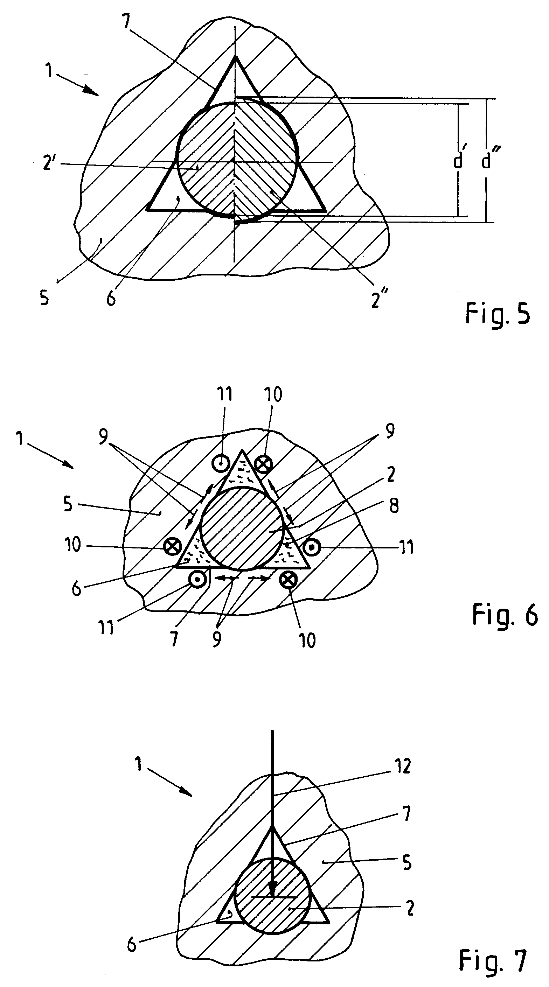

Die obigen Anforderung führen auch dazu, daß das neue Gleitlager 1 nicht auf einen bestimmten Durchmesser d des Lagerbolzens 2 angewiesen ist. Figur 5 illustriert, daß das elastische Gleitlager 1 auch mit Lagerbolzen 2 eines größeren Toleranzbereichs funktionsfähig ist. Dargestellt ist das Gleitlager 1 in der linken Hälfte der Figur 5 mit einem Lagerbolzen 2', der einen kleinen Durchmesser d' aufweist. In der rechten Hälfte von Figur 5 sind demgegenüber die Auswirkungen eines Lagerbolzens 2'' mit großem Durchmesser d'' dargestellt. Zwar führt der Lagerbolzen 2'' zu einer größeren Vorverformung des Federkörpers 6, aber auch der Lagerbolzen 2' wird mit einer Vorspannkraft von dem Federkörper 5 beaufschlagt und in die gewünschte Relativlage zentriert. Beide Durchmesser d' und d'' sind größer als der kleinste freie Querschnitt der zentralen Durchgangsöffnung 6, aber kleiner als der größte freie Querschnitt der Durchgangsöffnung 6. Hierbei ist unter dem kleinsten freien Querschnitt der Durchgangsöffnung 6 der Durchmesser des größten Kreises, der ganz in der Durchgangsöffnung 6 angeordnet werden kann, und unter dem größten freien Querschnitt der Durchgangsöffnung 6 der Durchmesser des kleinsten Kreises, der die Durchgangsöffnung 6 vollständig einschließt, zu verstehen.

Figur 6 zeigt die Auswirkungen einer Verschmutzung des elastischen Gleitlagers 1. Schmutz 8 im Bereich des elastischen Gleitlagers 1 wird bei radialen Bewegungen des Lagerbolzens 2 in Richtung der Pfeile 9 in die freien Ecken der zentralen Durchgangsöffnung 6 verschoben. Aus den freien Ecken der Durchgangsöffnung 6 wird der Schmutz 8 bei axialen, durch die Symbole 10 und 11 angedeuteten Bewegungen des Lagerbolzens 2 abgeführt. Ein Festfressen der Hülse 7 auf dem Lagerbolzen 2 ist bei dem elastischen Gleitlager 1 ohnehin unmöglich, da der Schmutz 8 sich nicht zwischen der Hülse 7 und dem Lagerbolzen 2 verkeilen kann. Dem steht der große innere Umfang der Hülse 7 im Vergleich zu dem äußeren Umfang des Lagerbolzens 2 entgegen.

Figur 7 zeigt die Auswirkung einer radial auf den Lagerbolzen 2 einwirkenden Kraft 12 auf das elastische Gleitlager 1. Auf der der Kraft gegenüberliegenden Seite der Hülse 7 wird der Federkörper 5 auf Druck belastet, auf der gegenüberliegenden Seite entlastet. Ein Abheben der Hülse 7 von dem Lagerbolzen 2 auf der entlasteten Seite des Federkörpers 5 ist jedoch durch eine ausreichende Vorspannung zwischen dem Federkörper 5 und dem Lagerbolzen 2 verhindert. Eine Beanspruchung des Federkörpers 5 auf Zug findet bei der dargestellten Belastung des Lagerbolzens 2 durch die Kraft 12 nicht statt. Eine solche Beanspruchung tritt nur dann ein, wenn die Hülse 7 soweit verformt wird, daß mit einer Druckeinwirkung auf der Vorderseite des Lagerbolzens eine Zugeinwirkung auf der Rückseite des Lagerbolzens einhergeht.

Die Herstellung des elastischen Gleitlagers 1 kann unter Verwendung eines extrudierten und zu Schlauchabschnitten abgelenkten Teflon-Schlauches für die Hülse 7 erfolgen. Die zunächst runden Schlauchabschnitte werden an ihrer Außenseite mit Haftmittel versehen und je nach Ausführungsform auf einen dreieckigen oder mehreckigen Formkern, der im Inneren eines Vulkanisierwerkzeuges angeordnet ist, aufgeformt. Hierdurch nehmen die Schlauchabschnitte die für die zentrale Durchgangsöffnung 6 charakteristische Form an. Anschließend wird die Hülse 7 mit einem später den Federkörper 5 ausbildenden Elastomer umspritzt. Auf diese Weise wird eine dauerhafte Verbindung der Hülse 7 mit dem Federkörper 5 erreicht.

### BEZUGSZEICHENLISTE

- 1: Gleitlager
- 2: Lagerbolzen
- 3: Bauteil
- 4: Rahmen
- 5: Federkörper
- 6: Durchgangsöffnung
- 7: Hülse
- 8: Schmutz
- 9: Pfeil
- 10: Symbol
- 11: Symbol
- 12: Kraft

## Patentansprüche

1. Elastisches Gleitlager mit einer zentralen Durchgangsöffnung zur Aufnahme eines im Querschnitt runden Lagerbolzens, wobei die Innenoberfläche der Durchgangsöffnung von einer in einem Federkörper aus einem elastischen Werkstoff eingebetteten Hülse ausgebildet ist, dadurch gekennzeichnet, daß die zentrale Durchgangsöffnung (6) einen mehreckigen oder sternförmigen Querschnitt aufweist und daß die Hülse (7) aus einem flexiblen Werkstoff ausgebildet ist.

2. Elastisches Gleitlager nach Anspruch 1, dadurch gekennzeichnet, daß der Querschnitt der zentralem Durchgangsöffnung (6) einem gleichschenkligen Dreieck entspricht.

3. Elastisches Gleitlager nach Anspruch 1 oder 2, dadurch gekennzeichnet, daß der kleinste freie Querschnitt der zentralen Durchgangsöffnung (6) kleiner als der Durchmesser (d) des Lagerbolzens (2) und deren größter freier Querschnitt größer als der Durchmesser (d) des Lagerbolzens (2) vorgesehen sind.

4. Elastisches Gleitlager nach Anspruch 1, 2 oder 3, dadurch gekennzeichnet, daß die Hülse (7) aus einem abriebfesten und temperaturstabilen Kunststoff ausgebildet ist.

5. Elastisches Gleitlager nach Anspruch 4, dadurch gekennzeichnet, daß die Hülse (7) aus Polytetraflourethen (PTFE) ausgebildet ist.

6. Elastisches Gleitlager nach einem der Ansprüche 1 bis 5, dadurch gekennzeichnet, daß die Hülse (7) ein verformter Schlauchabschnitt ist.

7. Elastisches Gleitlager nach einem der Ansprüche 1 bis 6, dadurch gekennzeichnet, daß der Federkörper (5) aus einem Elastomer ausgebildet ist.

8. Elastisches Gleitlager nach Anspruch 7, daß der Federkörper (5) ein an die Hülse (7) angespritztes Spritzgußteil ist.

9. Elastisches Gleitlager nach Anspruch 8, dadurch gekennzeichnet, daß zwischen der Hülse (7) und dem Federkörper (5) ein Haftmittel vorgesehen ist.
